# EUROPEAN PATENT SPECIFICATION

(11) **EP 2 574 147 B1**
(45) Date of publication and mention of the grant of the patent: **17.05.2017**
(21) Application number: 11181958.7
(22) Date of filing: 20.09.2011
(51) Int. Cl.: H05B 6/68

(54) **A power supply device for a microwave oven and an operating method thereof**
Energieversorgungsvorrichtung für einen Mikrowellenofen und Steuerungsverfahren dafür
Dispositif d'alimentation électrique pour four à micro-ondes et son procédé d'utilisation

(43) Date of publication of application: 27.03.2013
(73) Proprietor: Whirlpool Corporation, Benton Harbor, MI 49022 (US)
(72) Inventor: Pastore, Cristiano, 21025 Comerio (IT); Crisafulli, Vittorio, 21025 Comerio (IT)
(74) Representative: Guerci, Alessandro

(56) References cited:
- EP-A2- 0 516 122
- US-A1- 2004 144 776
- US-B2- 7 230 219

## Description

The present invention relates to a power supply device for supplying electric power to a microwave oven.

In a further aspect, the present invention relates to a method for operating a power supply device for a microwave oven.

As is known, microwave ovens comprise a magnetron device to generate a microwave electromagnetic radiation that is capable of inducing a dielectric heating process in the food to be cooked.

A magnetron device comprises a plurality of electrodes, in particular a cathode and an anode between which a DC driving voltage is applied.

Microwave radiation, typically with a frequency of 2.45 GHz, is generated when a flow of electrons circulates between the cathode and the anode, under the influence of electric and magnetic fields.

In terms of electric behaviour at its input terminals, a magnetron device can be considered as a non-linear load, in which a current flows only when the voltage at the input terminals exceeds a threshold value.

In a magnetron device, in fact, a current (anodic current) circulates at the anode only when the driving voltage between the electrodes exceeds a given threshold (typically around 4 kV for microwave ovens having a power range of 1 kW).

In a microwave oven, the magnetron device is typically fed by a power supply device.

Such a power supply device typically comprises a rectifying circuit, which receives an input voltage from the mains and outputs a first rectified voltage, and a switching converter, which receives said first rectified voltage and provides an adjustable second rectified voltage for driving the magnetron device.

It is known that one of the major issues that have to be faced when designing a power supply device for a microwave oven is represented by the harmonic content of the input current adsorbed from the mains.

When a relatively high input power is requested, said input current circulates for small fractions of the mains semi-cycle, thus leading to unacceptable levels of current distortion.

Several methods to operate the power supply of a microwave oven have been proposed in the attempt of achieving a mitigation of the harmonic content of the input current provided by the mains.

Examples of such known methods are disclosed in patent documents EP0516122B1, US7230219 or US6884977.

Traditional methods employ PWM modulation techniques to adjust a control quantity for the switching converter (e.g. the switching frequency or duty cycle), so that the input current follows a reference waveform.

Typically, a control loop is adopted, in which a single controller operates in a continuous regime and performs a cycle-by-cycle regulation of the input current.

Traditional methods to reduce the harmonic content of the input current adsorbed from the mains have some drawbacks.

A major difficulty to overcome consists in that such methods are mainly adapted to be implemented using analogue circuitries while their digital implementation may be quite difficult and expensive.

Since a continuous regulation of the input current is performed, the control loop needs to show high performances in terms of dynamic response in order to be able to follow a rapidly changing reference quantity.

Such performances cannot be ensured by low cost microcontrollers.

Thus, very powerful digital signal processors or microcontrollers need to be employed to ensure a proper operation of the control loop.

Of course, this leads to a dramatic increase of the industrial costs for manufacturing the power supply device.

Another drawback derives from the fact that, since the closed loop gain of the system may change dramatically within each mains semi-cycle (due to the non-linear nature of the load), serious problems in designing a stable controller for all the operating conditions may arise.

Further, it is not often possible to perform ancillary controls on the commutation conditions of the switching converter, such as, for example, the adjustment of the switching frequency or duty-cycle to ensure that the switching converter is constantly switching in zero voltage conditions (Zero Voltage Switching).

Therefore, the main aim of the present invention is to provide a power supply device for a microwave oven, and an operating method thereof, which allow the overcoming of the drawbacks mentioned above.

Within this aim, it is an object of the present invention to provide a power supply device, and an operating method thereof, which ensure an effective control of the harmonic content of the input current adsorbed from the mains.

A further object of the present invention is to provide a power supply device, and an operating method thereof, which allow to obtaining an improved operation of the magnetron device.

A further object of the present invention is to provide a power supply device, and an operating method thereof, which can be easily implemented using relatively cheap digital circuitries and control techniques.

A further object of the present invention is to provide a power supply device, which is easy to manufacture at industrial level, at competitive costs.

Thus, the present invention provides a power supply device for a microwave oven, according to the following claim 1.

In a general definition, the power supply device, according to the invention, comprises at least a switching converter for driving a magnetron device of the microwave oven and control means for operating of said power supply device.

Said control means comprise an array of first controllers of said switching converter for regulating the input current adsorbed from the mains.

Each of said first controllers is arranged to regulate said input current at one associated activation period belonging to a plurality of activation periods that are comprised in a mains semi-cycle.

Each of said first controllers is activated only at the corresponding associated activation period.

In a further aspect of the present invention, the present invention relates to a method for operating a power supply device for supplying power to a microwave oven.

The method, according to the invention, comprises the steps of:
- determining a plurality of predefined activation periods comprised in a mains semi-cycle;
- providing a plurality of first controllers of said switching converter for regulating said input current;
- activating each of said first controllers only at one associated activation period belonging to said plurality of activation periods.

Preferably, each of said first controllers, when it is activated at the associated activation period, calculates a first control value that is related to a control quantity for controlling the operation of said switching converter.

Said first control value is advantageously calculated in response to a quantity indicative of behaviour of the input current with respect to a desired current waveform.

Further features and advantages of the present invention will become apparent from the following description of preferred embodiments, taken in conjunction with the drawings, in which:

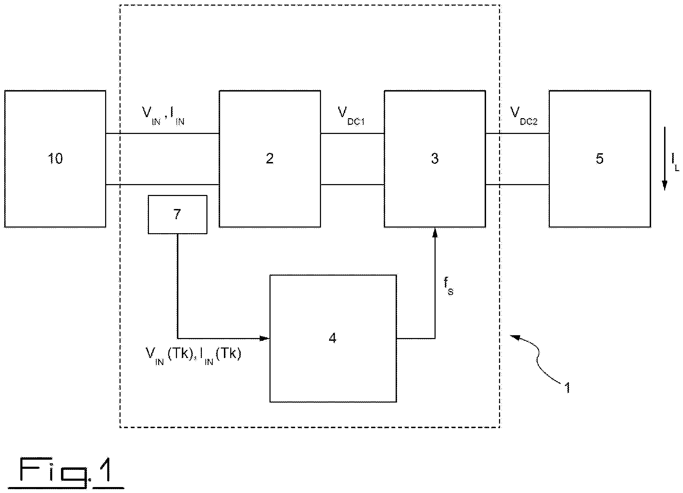

- Fig. 1 shows a schematic diagram of an embodiment of the power supply device, according to the invention; and

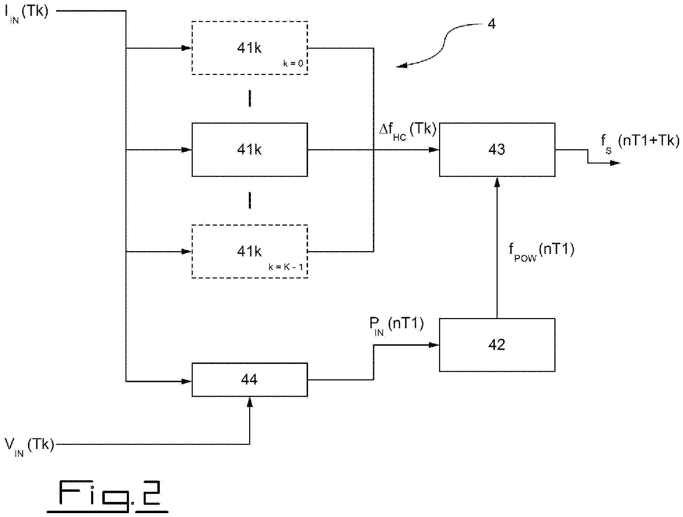

- Fig. 2 shows a schematic diagram of control means comprised in the power supply device of Fig.1; and

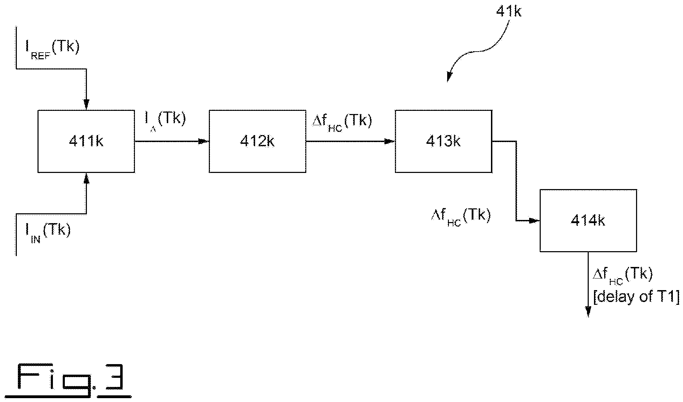

- Fig. 3 shows a schematic diagram of a first controller comprised in the control means of Fig.2; and

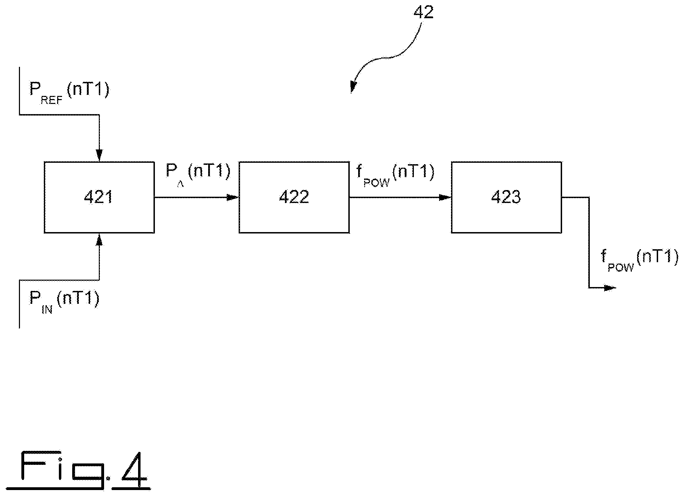

- Fig. 4 shows a schematic diagram of a second controller comprised in the control means of Fig.2; and
- Fig. 5-6 show some diagrams related to electric quantities generated by the power supply device of Fig.1 ; and
- Fig. 7-8 show some diagrams related to control values generated by the control means of Fig. 2.

Referring now to the cited figures, the present invention relates to a power supply device 1 for a microwave oven.

The power supply device 1 is electrically connectable to the mains 10, from which it receives an input voltage V_{IN} and an input current I_{IN}, which are periodic electric quantities having mains semi-cycles of predefined duration T₁. As an example, the duration of the mains semi-cycle is fixed at 10ms in 50Hz electric power distribution networks.

Preferably, the power supply device 1 comprises first rectifying means 2, for example a diode bridge, which receive the input voltage V_{IN} and output a first rectified voltage V_{DC1}.

The power supply device 1 comprises a switching converter 3, which is configured to drive the magnetron device 5 of the microwave oven.

The switching converter 3 receives the first rectified voltage V_{DC1} and provides an adjustable second rectified voltage V_{DC2} to drive the magnetron device 5.

The switching converter 3 may have any topology, according to the needs.

Preferably, the switching converter 3 is a half-bridge inverter or a quasi-resonant inverter. The switching converter 3 may advantageously comprise a plurality of electronic stages (not shown), such as, for example, a filtering stage to filter the first rectified voltage V_{DC1}, a switching stage to convert the first rectified voltage V_{DC1} in an high frequency AC signal, a step-up stage to boost said AC signal and a rectifying stage to obtain the second rectified voltage V_{DC2}.

The filtering stage of the switching converter 3 preferably provides a non-smoothing filtering of the first rectified voltage V_{DC1}.

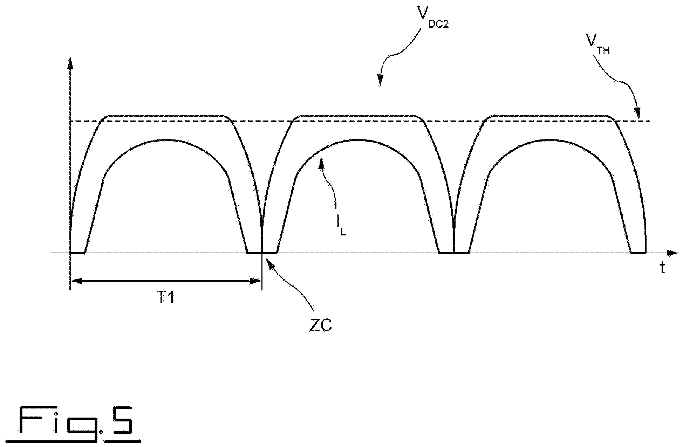

The second rectified voltage V_{DC2} thus shows fluctuations with a period equal to a mains semi-cycle (figure 5).

An anodic current I_{L} circulates in the magnetron device 5 when the second rectified voltage V_{DC2} exceeds a predefined threshold value V_{TH} (figure 5).

The power supply device 1 comprises control means 4.

Preferably, the control means 4 are operatively associated to sampling means 7 that may comprise, for example, current and voltage sensors operatively associated to an A/D converter.

The sampling means 7 are advantageously capable of providing the control means 4 with sampling values V_{IN}(Tk), I_{IN}(Tk) of the input voltage and current received from the mains 10, so that to allow a digital processing thereof.

Advantageously, the control means 4 comprise a plurality of controllers to provide a control quantity for controlling the operation of the switching converter 3.

Such a control quantity is advantageously represented by the switching frequency f_{S} or by the switching duty-cycle of the switching converter 3 or by another control quantity that may be preferably used in a PWM regulation scheme.

The present invention will be now described referring to the case in which the control quantity used for controlling the operation of the switching converter 3 is the switching frequency f_{S}.

With this choice, it is not intended to introduce any limitations of the scope of the present invention.

As mentioned above, other control quantities may in fact be adopted for controlling the operation of the switching converter 3 instead of the switching frequency f_{S}.

According to the invention, the control means 4 comprise an array 41 of first controllers 41k of the switching converter 3 for regulating the input current I_{IN} that the power supply device 1 receives from the mains.

Each controller 41k (k=0, ... ,K-1) is associated to one predefined activation period Tk (k=0, ... ,K-1) that belongs to a plurality of activation periods that are comprised in the mains semi-cycle.

In a mains semi-cycle, each controller 41k is activated at the associated activation period Tk and is kept in an idle state during the remaining time of the mains semi-cycle.

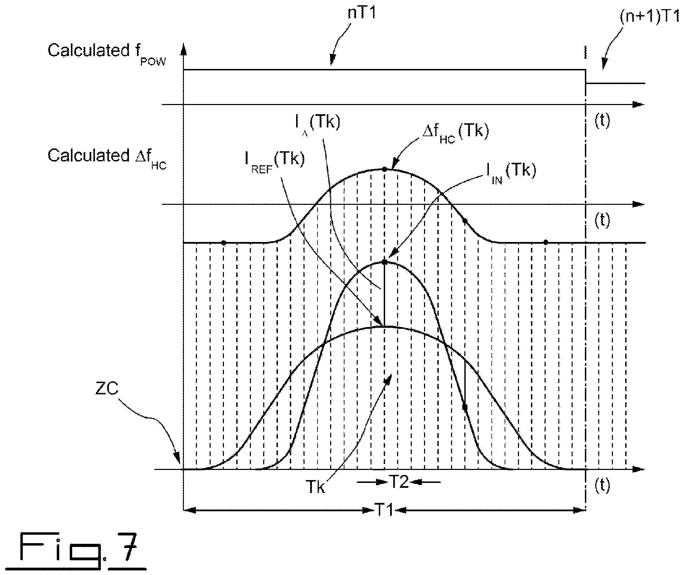

In other words, each mains semi-cycle is divided in a plurality of activation periods Tk (figure 7) and each controller 41k is arranged to operate only at the activation period Tk to which it is associated.

Each activation period Tk starts with a predefined and constant delay with respect to the starting instant ZC of the mains semi-cycle and is univocally associated to a corresponding controller 41k.

The activation periods Tk preferably have a same duration T2, which basically depends on the number K of time slots in which the mains semi-cycle is divided.

The number K of activation periods Tk within a mains semi-cycle may preferably vary between 10 and 100. A preferred number for said activation periods is 40.

The duration T2 of the activation periods Tk thus varies between 1ms and 100µs, with a preferred value of 250µs.

Alternative embodiments (not shown) of the present invention may however foresee that the activation periods Tk last differently one from the other, according to the needs.

In any case, it has to be noticed how the duration of the activation periods Tk (for example 250µs) conveniently is quite longer with respect to the duration of a switching period 1/f_{S} of the switching converter 3, a typical value of which is 25µs.

This advantageous feature clearly evidences how the set of controllers 41k, behaves quite differently from a common digital controller for controlling the switching converter 3, in which the sampling period would be necessarily correlated with the switching frequency f_{S} of the switching converter.

Preferably, when it is activated at the associated activation period Tk, each controller 41k calculates a first control value Δf_{HC}(Tk) that is related to the control quantity f_{S} for controlling the operation of the switching converter 3.

Such a first control value Δf_{HC}(Tk) is advantageously calculated in response to a quantity indicative of the behaviour of the input current I_{IN} with respect to a desired waveform.

Preferably, the control means 4 comprise a second controller 42 of the switching converter 3 for regulating the average input power that the power supply device 1 receives from the mains 10.

Preferably, the second controller 42 calculates a second control value f_{POW}(nT1) that is related to the control quantity f_{S} for controlling the operation of the switching converter 3, said second control value being calculated in response to a quantity indicative of the behaviour of the average input power P_{IN}(nT1) with respect to a desired profile during a mains semi-cycle.

Preferably, the control means 4 comprise first calculating means 43 to calculate the control quantity f_{S} for controlling the operation of the switching converter 3 on the base of the first control values Δf_{HC}(Tk), calculated by each of the first controllers 41k at the associated activation period Tk, and on the base of the second control value f_{POW}(nT1) calculated by the second controller 42.

In particular, as it will be better explained later, the first control value Δf_{HC} is advantageously calculated as a correction quantity of the second control value f_{POW}(nT1).

Preferably, the control means 4 comprise second calculating means 44 to calculate the average input power P_{IN}(nT1) received by the power supply device 1 in a mains semi-cycle.

The average input power P_{IN}(nT1) is advantageously calculated on the base of the sampling values V_{IN}(Tk) and I_{IN}(Tk) provided by the sampling means 7.

Preferably, the first control value Δf_{HC}(Tk) is maintained fixed for a time equal to the duration of one of said activation periods Tk, when said first control value is employed for controlling said switching converter 3.

According to a preferred embodiment of the present invention, each of the first controllers 41k comprises first regulating means 411k, preferably a digital adder.

When the controller 41k is active at the associated activation period Tk, the regulating means 411k receive a first sampling value I_{IN}(Tk) from the sampling means 7, which is indicative of the amplitude of the input current I_{IN}.

Preferably, the first sampling value I_{IN}(Tk) is indicative of the amplitude of the input current I_{IN} at the starting of the activation period Tk.

However, if the duration of the activation periods Tk is relatively extended, the first sampling value I_{IN}(Tk) may be calculated as the average value of samples of the input current I_{IN} taken by the sampling means 7 at the activation period T(k-1) that immediately precedes the associated activation period Tk.

The regulating means 411k receive also a first reference value I_{REF}(Tk) that is indicative of the amplitude of a reference current I_{REF} for the activation period Tk.

The first current reference value I_{REF}(Tk) is advantageously predefined and is stored in a memory location of the control means 4.

The regulating means 411k calculate an error value I_{Δ}(Tk), which is indicative of the behaviour of the input current I_{IN} with respect to a first reference value I_{REF}(Tk).

In other words, the error values I_{Δ}(Tk) represents a quantity indicative of the behaviour of the input current I_{IN} with respect to a desired current waveform at the starting of the activation period Tk.

Said desired current waveform may be any according to the needs, for example having a saddle-shaped waveform or a sinusoidal waveform.

Preferably, the error value I_{Δ}(Tk) is indicative of the difference between the first sampling value I_{IN}(Tk) and the corresponding first reference value I_{REF}(Tk).

Preferably, the controller 41k comprises second regulating means 412k, preferably a digital PI regulator.

When the controller 41k is active, the second regulating means 412k receive the error value I_{Δ}(Tk) and calculate the first control value Δf_{HC}(Tk) in response to said error value.

According to a preferred embodiment of the present invention, each first controller 41k, in particular the second regulating means 412k, calculates the first control value Δf_{HC}(Tk) in such a way to modulate the gain of the switching converter 3.

In particular, the converter gain is modulated on the base of the delay of the activation period Tk with respect to the starting instant ZC of the mains semi-cycle.

Preferably, the first control value Δf_{HC}(Tk) is calculated so as to reduce the gain of the switching converter, if the activation period Tk is relatively far from the zero crossing instants ZC of the mains semi-cycle.

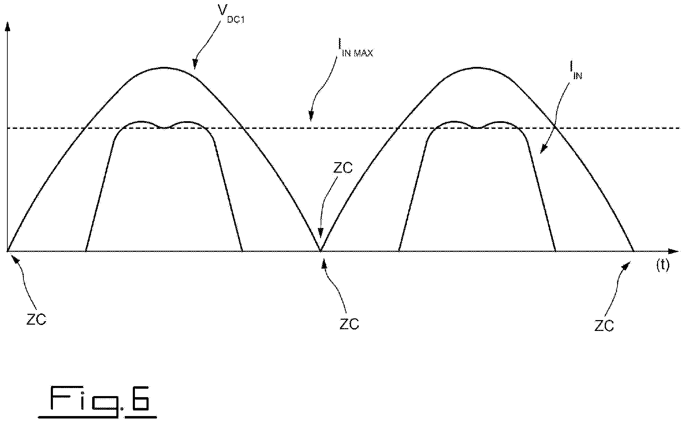

In this manner, a maximum value I_{INMAX} may be easily imposed to the input current I_{IN} when this latter is far from the zero crossing instants ZC (figure 6).

This solution is quite advantageous since it allows to reducing the crest factor of the input current I_{IN} and to increasing the maximum power that can be delivered by the switching converter 3 to the magnetron device 5.

Preferably, the controller 41k comprises also third regulating means 413k, e.g. a digital comparator, for limiting the calculated first control value Δf_{HC}(Tk) within a first predefined range.

When the controller 41k is active, the third regulating means 413k receive the first control value Δf_{HC}(Tk), calculated by the second regulating means 412k, and check whether such a value falls within a first predefined range.

If the first control value Δf_{HC}(Tk) is not comprised within said first predefined range, the third regulating means 413k equalizes it to a predefined first maximum or minimum allowed value.

The third regulating means 413k mainly intervene when the activation period Tk associated to the controller 41k is positioned close to the zero crossing instants ZC.

Preferably, the controller 41k comprises buffering means 414k, e.g. a digital buffer, for buffering the first control value Δf_{HC}(Tk) for a period of time equal to the duration T1 of a mains semi-cycle.

The buffering means 414k stores the calculated first control value Δf_{HC}(Tk) and impose a time delay of T1 to the first control value Δf_{HC}(Tk) before outputting it.

The reaction of the controller 41k to the behaviour of the input current I_{IN} at the starting of the activation period Tk is thus delayed to the next semi-cycle of the mains.

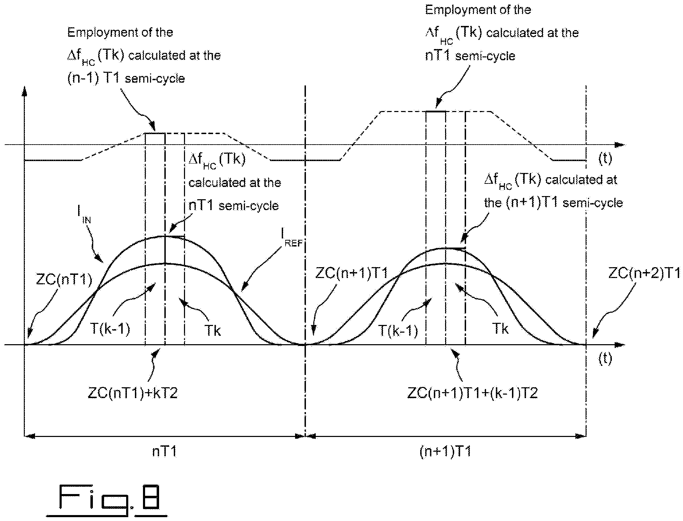

In other words, the controller 41k preferably exerts its control action on the switching converter 3 at the mains semi-cycle (n+1)T1 that follows the mains semi-cycle (nT1) at which the first control value Δf_{HC}(Tk) has been calculated in response to a quantity (the error value I_{Δ}(Tk)) indicative of the behaviour of the input current I_{IN} with respect to a desired waveform at the starting of the activation period Tk (see figure 8).

This solution provides relevant advantages.

The delay imposed by the buffering means 414k ensures that each controller 41k outputs the calculated first control value Δf_{HC}(Tk) always at the same instant relatively to mains zero crossing instant ZC.

Thus, it is ensured that a same controller 41k regulates the input current I_{IN} always for the same time slot of the mains semi-cycle.

The delay imposed by the first buffering means 414k reduces possible reactions between controllers associated to activation periods close to the activation period Tk of the first controller 41k, thus providing a much more efficient and robust control action.

Alternative embodiments (not shown) of the present invention may however foresee that the first control value Δf_{HC}(Tk) is immediately employed for controlling the switching converter 3 in the same the mains semi-cycle (nT1), in which it is calculated.

According to a preferred embodiment of the present invention, the second controller 42 comprises fourth regulating means 421, e.g. a digital adder, for calculating a second error value P_{Δ}(nT1).

The second error value P_{Δ}(nT1) is indicative of the difference between a value P_{IN}(nT1), indicative of the average input power received from the mains 10, and a second reference value P_{REF}(nT1), indicative of a reference average power to be received from the mains during the mains semi-cycle.

As illustrated above, the second sampling value P_{IN}(nT1) is advantageously calculated by the second calculating means 44 on the base of the sampling values V_{IN}(Tk) and I_{IN}(Tk) provided by the sampling means 7.

The calculating means 44 advantageously store the sampling values V_{IN}(Tk) and I_{IN}(Tk), which are provided by the sampling means with a sampling frequency equal to 1/T2, and calculate the average input power average input power P_{IN}(nT1) over a time equal to T1.

It has to be noticed how the second error value P_{Δ}(nT1) represents a quantity indicative of the behaviour of the average input power P_{IN}(nT1) with respect to a desired profile during a mains semi-cycle.

The second controller 42 preferably comprises fifth regulating means 422 e.g. a digital PI regulator, for calculating the second control value f_{POW}(nT1) in response to the second error value P_{Δ}.

Preferably, the second controller 42 comprises sixth regulating means 423, e.g. a digital comparator, to limit the calculated second control value f_{POW}(nT1) within a second predefined range.

The regulating means 423 check whether the second control value f_{POW}(nT1) falls within a second predefined range.

The second control value f_{POW}(nT1) is equalized to a predefined second maximum or minimum allowed value, if it is not comprised within said second predefined range.

The regulating means 423 mainly intervene when the switching frequency f_{S} of the switching converter 3 is close to or below a minimum allowed value.

Referring to the figures 7-8 the operation of the control means 4 is described in more details for the sake of clarity.

The semi-cycle of the input current I_{IN} is divided into K activation periods Tk, each of which is associated to a first controller 41k that operates only during the associated activation period Tk.

Each controller 41k works independently from the others and the first control value Δf_{HC}(Tk) that is output by each controller 41k is not influenced by the behaviour of the other controllers.

At each generic semi-cycle nT1 (n = 1,2,...), the controller 41k is active only at the activation period Tk (k=0,...,K-1), which always starts with a predefined delay with respect to the starting instant ZC of the semi-cycle, namely at the instant ZC(nT1)+kT2.

At the instant ZC(nT1)+kT2, the controller 41k receives the first sampling value the first sampling value I_{IN}(Tk) and the corresponding first reference value I_{REF}(Tk) related to the activation period Tk.

The first regulating means 411k calculate the error value I_{Δ}(Tk) related to the activation period Tk and the second regulating means 412k then calculate the first control value Δf_{HC}(Tk).

If the first control value Δf_{HC}(Tk) is within a first predefined range, it is not changed. Otherwise, it will be equalized to a first maximum or minimum value by the third regulating means 413k.

The first control value Δf_{HC}(Tk) is then stored by the buffering means 414k and its output is delayed of a time equal to a mains semi-cycle T1, so that the first control value Δf_{HC}(Tk) is actually employed at the next semi-cycle (n+1)T1.

The first control value Δf_{HC}(Tk) is maintained fixed for a time equal to the duration of the activation period, in which is employed for controlling said switching converter 3.

In particular, as evidenced in figure 8, the first control value Δf_{HC}(Tk) calculated at the generic nT1 semi-cycle is preferably employed at the starting instant ZC((n+1)T1)+(k-1)T2 of the T(k-1) activation period of the subsequent semi-cycle (n+1)T1.

The control reaction to the error of the input current I_{IN} with respect to its reference value at the instant ZC(nT1)+kT2 it is thus exerted at the instant ZC((n+1)T1)+(k-1)T2.

Such a delay allows the performing of a less invasive control action of the harmonic content of the input current I_{IN}.

Experimental measurements have shown that when a steady state is reached for a given power level, the input current I_{IN} shape substantially remains unchanged.

If voltage or load conditions change, the controller 41k will adapt the input current I_{IN} to the new operating conditions within the following 10-15 mains semi-cycles.

The second controller 42 works in parallel with respect to the first controllers 41k.

At each semi-cycle nT1, the second controller 42 outputs a second control value f_{POW}(nT1) to reduce the error of the average input power P_{IN}(nT1) with respect to its reference value P_{REF}(nT1).

The control quantity f_{S} for controlling the switch converter 3 is thus calculated by the first controlling means 43 as the sum of the second control quantity f_{POW}(nT1), which changes every T1 s, with the first control quantity Δf_{HC}(Tk), which changes every T2=T1/K s.

The second control quantity f_{POW}(nT1), calculated by the second controller 42 at each mains semi-cycle, is thus corrected at each activation period Tk by the first control quantity Δf_{HC}, calculated by each controller 41k, which thus represents a correction factor (positive or negative or null) of the of the second control quantity f_{POW}(nT1).

Preferably, the control means 4 are implemented by a digital microprocessor.

The controllers 41k and 42, the calculating means 43, 44 and other processing means comprised in the control means 4 are thus preferably implemented by sets of software instructions that can be executed by said microprocessor.

The execution of the software routines implementing the controllers 41k and 42 as well as of the calculating means 43, 44 is managed through proper interrupt signals generated by the microprocessor.

A further aspect of the present invention relates to a method for operating the power supply device 1.

The method, according to the invention, comprises the following steps:
- determining a plurality of predefined activation periods Tk comprised in a mains semi-cycle nT1;
- providing a plurality of first controllers 41k of the switching converter 3 for regulating the input current I_{IN}, each of the first controllers 41k being associated only to one of said activation periods Tk;
- activating each of the first controllers 41k only at the associated activation period Tk. Preferably, each of said first controllers 41k, when activated at the associated activation period Tk, calculates the first control value Δf_{HC}(Tk), which is related to a control quantity f_{S} for controlling the switching converter 3.

Preferably, said first control value Δf_{HC}(Tk) is maintained fixed for a time equal to the duration of one of said activation periods Tk, when said first control value is employed for controlling said switching converter 3.

Preferably, each of said first controllers 41k, when activated at the associated activation period Tk, calculates the first control value Δf_{HC}(Tk), so as to modulate the gain of the switching converter 3 on the base of the delay of the associated activation period Tk with respect to the starting instant ZC of the mains semi-cycle.

According to invention, each of said first controllers 41k, when activated at the activation period Tk, preferably:
- receives the first sampling value I_{IN}(Tk), which is indicative of the input current I_{IN} at the activation period Tk;
- receives the first reference value I_{REF}(Tk), which is indicative of a reference current I_{REF} at the activation period Tk;
- calculates the first error value I_{Δ}(Tk), which is indicative of the behaviour of said input current I_{IN} with respect to said reference current I_{REF}. Preferably, the first error value I_{Δ}(Tk) is indicative of a difference between said first sampling value and said first reference value;
- calculates the first control value Δf_{HC}(Tk) in response to the first error value I_{Δ}(Tk). According to the invention, each of said first controllers 41k, when activated at the activation period Tk, preferably:
- checks whether the first control value Δf_{HC}(Tk) is comprised within a first predefined range;
- equalizes the first control value Δf_{HC}(Tk) to a first predefined maximum or minimum value, in case said first control value is not comprised in said first predefined range. According to the invention, each of said first controllers 41k, when activated at the activation period Tk, preferably:
- buffers the first control value Δf_{HC}(Tk) for a period of time equal to the duration T1 of a mains semi-cycle.

Preferably, the method, according to the present invention, comprises also the step of:
- providing a second controller 42 of the switching converter 3 for regulating the average input power PIN received from the mains 10.

Preferably, said second controller 42 calculates the second control value f_{POW}(nT1), which is related to the control quantity f_{S} for controlling the switching converter 3.

Preferably, the second controller 42:
- receives the second sampling value P_{IN}(nT1) which is indicative of the average input power PIN in a mains semi-cycle;
- receives the reference value P_{REF} (nT1), which is indicative of a reference average power to be received during a mains semi-cycle;
- calculates a second error value P_{Δ}(nT1), which is indicative of the difference between said second sampling value and said second reference value;
- calculates the second control value f_{POW}(nT1) in response to the second error value P_{Δ}(nT1).

Preferably, the second controller 42:
- checks whether the second control value f_{POW}(nT1) is comprised within a second predefined range;
- equalizes the second control value f_{POW}(nT1) to a predefined second maximum or minimum value, if the second control value f_{POW}(nT1) is not comprised in the second predefined range.

Preferably, the method, according to the invention, comprises the step of:
- providing the first calculating means 43 for calculating the control quantity f_{S} on the base of the first control value Δf_{HC}(Tk), calculated by each of said first controllers 41k at the
associated activation period Tk, and on the base of the second control value f_{POW}(nT1). The power supply device 1 and the operating method thereof, according to the present invention, fully allow the achievement of the intended aims and objects.

Each of the controllers 41k is activated only at a given angle of the mains semi-cycle. Further, the activation period Tk of each controller 41k is relatively short with respect the mains semi-cycle but it is long with respect to the duration of a switching period 1/f_{S} of the switching converter 3.

Thus, the performances required to each controller 41k for exerting its control action are relatively low in terms of dynamic response, since each controller 41k needs only to adjust the current I_{IN} with respect to a quasi-constant value and not with respect to a rapidly changing target profile.

The use of an array of controllers for regulating the input current I_{IN} thus greatly reduces the HW and computational requirements associated with the mitigation of the harmonic content of the input current I_{IN}.

This is quite advantageous since the control means 4 can thus be easily implemented by a low cost embedded digital microprocessor with remarkable benefits for what concerning the flexibility of use and the possibility of performing ancillary controls of the operation of the power supply device.

The power supply device, and the operating method thereof, according to the invention, allows to effectively reducing the harmonic content and the crest factor of the input current I_{IN}.

The power supply device, and the operating method thereof, according to the invention, allows to optimizing the power delivered by the switching converter 3, thereby allowing an improved operation of the magnetron device 5.

The power supply device, according to the invention, has a relatively simple structure, which has proven to be easy and relatively cheap to manufacture at industrial level.

## Claims

1. A power supply device (1) for a microwave oven, said power supply device receiving from the mains (10) an input voltage (V_{IN}) and an input current (I_{IN}) having mains semi-cycles of predefined duration (T₁), said power supply device comprising a switching converter (3) for driving a magnetron device (5) of said microwave oven and control means (4) for operating of said power supply device, **characterised in that** said control means (4) comprise an array (41) of first controllers (41k) of said switching converter (3) for regulating said input current (I_{IN}), each of said first controllers (41k) being activated at one associated activation period (Tk) belonging to a plurality of activation periods (Tk, T(k-1)) comprised in a mains semi-cycle.

2. A power supply device, according to claim 1, **characterised in that** each of said first controllers (41k) calculates a first control value (Δf_{HC}(Tk)), which is related to a control quantity (f_{S}) for controlling said switching converter (3).

3. A power supply device, according to claim 2, **characterised in that** said first control value (Δf_{HC}(Tk)) is maintained fixed for a time equal to the duration of one of said activation periods (Tk, T(k-1)), when said first control value is employed for controlling said switching converter (3).

4. A power supply device, according to one or more of the claims from 2 to 3, **characterised in that** each of said first controllers (41k) calculates said first control value (Δf_{HC}(Tk)), so as to modulate the gain of said switching converter (3) on the base of the delay of said associated activation period (Tk) with respect to the starting instant (ZC) of the mains semi-cycle.

5. A power supply device, according to one or more of the claims from 2 to 4, **characterised in that** each of said first controllers (41k) comprises:
- first regulating means (411k) for calculating an error value (I_{Δ}(Tk)), which is indicative of the behaviour of said input current (I_{IN}) with respect to a first reference value (I_{REF}(Tk)) of said input current;
- second regulating means (412k) for calculating said first control value (Δf_{HC}(Tk)) in response to said error value (I_{Δ}(Tk)).

6. A power supply device, according to one or more of the previous claims, **characterised in that** said control means (4) comprise a second controller (42) of said switching converter for regulating the average input power (P_{IN}(nT1)) received from the mains (10), said second controller calculating a second control value (f_{POW}(nT1)), which is related to said control quantity (fs).

7. A power supply device, according to claims 2 and 6, **characterised in that** said control means (4) comprise first calculating means (43) for calculating said control quantity (f_{S}(nT1+Tk)) on the base of said first control value (Δf_{HC}(nT1)), calculated by each of said first controllers (41k) at the associated activation period (Tk), and on the base of said second control value (f_{POW}(nT1)).

8. A power supply device, according to one or more of the previous claims, **characterised in that** said control means (4) are digitally implemented by a microprocessor.

9. A microwave oven **characterised in that** it comprises a power supply device, according to one or more of the previous claims.

10. A method for operating a power supply device (1) for supplying power to a microwave oven, said power supply device receiving from the mains an input voltage (V_{IN}) and an input current (I_{IN}) having mains semi-cycles of predefined duration (T1), said power supply device comprising a switching converter (3) for providing electric power to a magnetron device (5) of said microwave oven, **characterised in that** it comprises the steps of:
- determining a plurality of activation periods (Tk, T(k-1)) comprised in a mains semi-cycle;
- providing a plurality of first controllers (41k) of said switching converter (3) for regulating said input current (I_{IN});
- activating each of said first controllers (41k) at one associated activation period (Tk) belonging to said plurality of activation periods (Tk, T(k-1));

11. A method, according to claim 10, **characterised in that** each of said first controllers (41k) calculates a first control value (Δf_{HC}(Tk)), which is related to a control quantity (f_{S}) for controlling said switching converter (3).

12. A method, according to claim 11, **characterised in that** said first control value (Δf_{HC}(Tk)) is maintained fixed for a time equal to the duration of one of said activation periods (Tk, T(k-1)), when said first control value is employed for controlling said switching converter (3).

13. A method, according to one or more of the claims from 11 to 12, **characterised in that** each of said first controllers (41k) calculates said first control value (Δf_{HC}(Tk)), so as to modulate the gain of said switching converter (3) on the base of the delay of said associated activation period (Tk) with respect to the starting instant (ZC) of the mains semi-cycle.

14. A method, according to one or more of the claims from 11 to 13, **characterised in that** each of said first controllers (41k):
- calculates an error value (I_{Δ}(Tk)), which is indicative of the behaviour of said input current (I_{IN}) with respect to a first reference value (I_{REF}(Tk)) of said input current;
- calculates said first control value (Δf_{HC}(Tk)) in response to said error value (I_{Δ}(Tk)).

15. A method, according to one or more of the claims from 10 to 14, **characterised in that** it comprises the step of:
- providing a second controller (42) of said switching converter (3) for regulating the average input power (P_{IN}) received from the mains (10), said second controller calculating a second control value (f_{POW}(nT1)), which is related to said control quantity (f_{S}).

16. A method, according to claims 11 and 15, **characterised in that** it comprises the step of:
- providing first calculating means (43) for calculating said control quantity (f_{S}(nT1+Tk)) on the base of said first control value (Δf_{HC}(Tk)), calculated by each of said first controllers (41k) at the associated activation period (Tk), and on the base of said second control value (f_{POW}(nT1)).

## Patentansprüche

1. Leistungsversorgungsvorrichtung (1) für einen Mikrowellenherd, wobei die Leistungsversorgungsvorrichtung von dem Stromnetz (10) eine Eingangsspannung (V_{IN}) und einen Eingangsstrom (I_{IN}) empfängt, die Netzstrom-Halbzyklen mit vorbestimmter Dauer (T₁) haben, wobei die Leistungsversorgungsvorrichtung einen Schaltwandler (3) zum Antreiben einer Magnetronvorrichtung (5) des Mikrowellenherds und Steuermittel (4) zum Betreiben der Leistungsversorgungsvorrichtung umfasst, **dadurch gekennzeichnet, dass** die Steuermittel (4) eine Anordnung (41) erster Steuervorrichtungen (41k) des Schaltwandlers (3) zum Regulieren des Eingangsstroms (I_{IN}) umfassen, wobei jede der ersten Steuervorrichtungen (41k) an einer dazugehörenden Aktivierungsperiode (Tk) aktiviert wird, die zu einer Vielzahl von Aktivierungsperioden (Tk, T(k-1)) gehört, die in einem Netzstrom-Halbzyklus enthalten sind.

2. Leistungsversorgungsvorrichtung nach Anspruch 1, **dadurch gekennzeichnet, dass** jede der ersten Steuervorrichtungen (41k) einen ersten Steuerwert (Δf_{HC}(Tk)), der mit einer Steuermenge (f_{S}) zum Steuern des Schaltwandlers (3) verbunden ist, berechnet.

3. Leistungsversorgungsvorrichtung nach Anspruch 2, **dadurch gekennzeichnet, dass** der erste Steuerwert (ΔfHC(Tk)) während einer Zeit stationär gehalten wird, die gleich der Dauer einer der Aktivierungsperioden (Tk, T(k-1) ist, wenn der erste Steuerwert zum Steuern des Schaltwandlers (3) verwendet wird.

4. Leistungsversorgungsvorrichtung nach einem oder mehreren der Ansprüche 2 bis 3, **dadurch gekennzeichnet, dass** jede der ersten Steuervorrichtungen (41k) den ersten Steuerwert (ΔfHC(Tk)) derart berechnet, dass die Verstärkung des Schaltwandlers (3) auf der Basis der Verzögerung der dazugehörenden Aktivierungsperiode (Tk) in Bezug zu dem Startaugenblick (ZC) des Netzstrom-Halbzyklus moduliert wird.

5. Leistungsversorgungsvorrichtung nach einem oder mehreren der Ansprüche 2 bis 4, **dadurch gekennzeichnet, dass** jede der ersten Steuervorrichtungen (41k) Folgendes umfasst:
- erste Reguliermittel (411k) zum Berechnen eines Fehlerwerts (I_{Δ}(Tk)), der auf das Verhalten des Eingangsstroms (I_{IN}) in Bezug zu einem ersten Bezugswert (I_{REF}(Tk)) des Eingangsstroms hinweist,
- zweite Regulierungsmittel (412k) zum Berechnen des ersten Steuerwerts (ΔfHC(Tk)) als Reaktion auf den Fehlerwert (I_{Δ}(Tk)).

6. Leistungsversorgungsvorrichtung nach einem oder mehreren der vorhergehenden Ansprüche, **dadurch gekennzeichnet, dass** die Steuermittel (4) eine zweite Steuervorrichtung (42) des Schaltwandlers zum Regulieren der mittleren Eingangsleistung (P_{IN}(nT1), die von dem Stromnetz (10) empfangen wird, umfassen, wobei die zweite Steuervorrichtung einen zweiten Steuerwert (f_{POW}(nT1)) berechnet, der mit der Steuermenge (f_{S}) verbunden ist.

7. Leistungsversorgungsvorrichtung nach Anspruch 2 und 6, **dadurch gekennzeichnet, dass** die Steuermittel (4) erste Rechenmittel (43) zum Berechnen der Steuermenge (f_{S}(nT1+Tk)) auf der Basis des ersten Steuerwerts (Δf_{HC}(nT1)), der von jeder der ersten Steuervorrichtungen (41k) an der dazugehörenden Aktivierungsperiode (Tk) berechnet wird, und auf der Basis des zweiten Steuerwerts (f_{POW}(nT1)), umfassen.

8. Leistungsversorgungsvorrichtung nach einem oder mehreren der vorhergehenden Ansprüche, **dadurch gekennzeichnet, dass** die Steuermittel (4) von einem Mikroprozessor digital umgesetzt werden.

9. Mikrowellenherd **dadurch gekennzeichnet, dass** er eine Leistungsversorgungsvorrichtung nach einem oder mehreren der vorhergehenden Ansprüche umfasst.

10. Verfahren zum Betreiben einer Leistungsversorgungsvorrichtung (1) zum Liefern von Leistung zu einem Mikrowellenherd, wobei die Leistungsversorgungsvorrichtung von dem Stromnetz eine Eingangsspannung (V_{IN}) und einen Eingangsstrom (I_{IN}), die Netzstrom-Halbzyklen mit einer vordefinierten Dauer (T1) haben, empfängt, wobei die Leistungsversorgungsvorrichtung einen Schaltwandler (3) umfasst, um elektrische Leistung zu einer Magnetronvorrichtung (5) des Mikrowellenherds zu liefern, **dadurch gekennzeichnet, dass** es die folgenden Schritte aufweist:
- Bestimmen einer Vielzahl von Aktivierungsperioden (Tk, T(k-1)), die in einem Netzstrom-Halbzyklus enthalten sind,
- Bereitstellen einer Vielzahl erster Steuervorrichtungen (41k) des Schaltwandlers (3) zum Regulieren des Eingangsstroms (I_{IN}),
- Aktivieren jeder der ersten Steuervorrichtungen (41k) an einer dazugehörenden Aktivierungsperiode (Tk), die zu der Vielzahl von Aktivierungsperioden (Tk, T(k-1)) gehört.

11. Verfahren nach Anspruch 10, **dadurch gekennzeichnet, dass** jede der ersten Steuervorrichtungen (41k) einen ersten Steuerwert (Δf_{HC}(Tk)) berechnet, der mit einer Steuermenge (f_{S}) zum Steuern des Schaltwandlers (3) verbunden ist.

12. Verfahren nach Anspruch 11, **dadurch gekennzeichnet, dass** der erste Steuerwert (Δf_{HC}(Tk)) während einer Zeit gleich der Dauer einer der ersten Aktivierungsperioden (Tk, T(k-1)) stationär gehalten wird, wenn der erste Steuerwert zum Steuern des Schaltwandlers (3) verwendet wird.

13. Verfahren nach einem oder mehreren der Ansprüche 11 bis 12, **dadurch gekennzeichnet, dass** jede der ersten Steuervorrichtungen (41k) den ersten Steuerwert (Δf_{HC}(Tk)) derart berechnet, dass die Verstärkung des Schaltwandlers (3) auf der Basis der Verzögerung der dazugehörenden Aktivierungsperiode (Tk) in Bezug auf den Startaugenblick (ZC) des Netzstrom-Halbzyklus moduliert wird.

14. Verfahren nach einem oder mehreren der Ansprüche von 11 bis 13, **dadurch gekennzeichnet, dass** jede der ersten Steuervorrichtungen (41k):
- einen Fehlerwert (I_{Δ}(Tk)) berechnet, der auf das Verhalten des Eingangsstroms (I_{IN}) in Bezug zu einem ersten Bezugswert (I_{REF}(Tk)) des Eingangsstroms hinweist,
- den ersten Steuerwert (Δf_{HC}(Tk)) als Reaktion auf den Fehlerwert (I_{Δ}(Tk)) berechnet.

15. Verfahren nach einem oder mehreren der Ansprüche 10 bis 14, **dadurch gekennzeichnet, dass** es die folgenden Schritte umfasst:
- Bereitstellen einer zweiten Steuervorrichtung (42) des Schaltwandlers (3) zum Regulieren der mittleren Eingangsleistung (P_{IN}), die von dem Stromnetz (10) empfangen wird, wobei die zweite Steuervorrichtung einen zweiten Steuerwert (f_{POW}(nT1)) berechnet, der mit der Steuermenge (f_{S}) verbunden ist.

16. Verfahren nach den Ansprüchen 11 und 15, **dadurch gekennzeichnet, dass** es den folgenden Schritt umfasst:
- Bereitstellen erster Rechenmittel (43) zum Berechnen der Steuermenge (f_{S}(nT1+Tk)) auf der Basis des ersten Steuerwerts (Δf_{HC}(Tk)), der von jeder der ersten Steuervorrichtungen (41k) an der dazugehörenden Aktivierungsperiode (Tk) berechnet wird, und auf der Basis des zweiten Steuerwerts (f_{POW}(nT1)).

## Revendications

1. Dispositif d'alimentation électrique (1) pour un four à micro-ondes, ledit dispositif d'alimentation électrique recevant du réseau (10) une tension d'entrée (V_{IN}) et un courant d'entrée (I_{IN}) ayant des semi-cycles de réseau d'une durée prédéfinie (T₁), ledit dispositif d'alimentation électrique comprenant un convertisseur de commutation (3) pour commander un dispositif magnétron (5) dudit four à micro-ondes et des moyens de commande (4) pour le fonctionnement dudit dispositif d'alimentation électrique, **caractérisé en ce que** lesdits moyens de commande (4) comprennent un réseau (41) de premiers régulateurs (41k) dudit convertisseur de commutation (3) pour réguler ledit courant d'entrée (I_{IN}), chacun desdits premiers régulateurs (41k) étant activé à une période d'activation associée (Tk) appartenant à une pluralité de périodes d'activation (Tk, T(k-1)) comprises dans un semi-cycle de réseau.

2. Dispositif d'alimentation électrique selon la revendication 1, **caractérisé en ce que** chacun desdits premiers régulateurs (41k) calcule une première valeur de commande (Δf_{HC}(Tk)), qui est en rapport avec une quantité de commande (f_{S}) pour commander ledit convertisseur de commutation (3).

3. Dispositif d'alimentation électrique selon la revendication 2, **caractérisé en ce que** ladite première valeur de commande (Δf_{HC}(Tk)) est maintenue fixe pendant une période égale à la durée de l'une desdites périodes d'activation (Tk, T(k-1)), lorsque ladite première valeur de commande est employée pour commander ledit convertisseur de commutateur (3).

4. Dispositif d'alimentation électrique selon une ou plusieurs des revendications 2 à 3, **caractérisé en ce que** chacun desdits premiers régulateurs (41k) calcule ladite première valeur de commande (Δf_{HC}(Tk)) de manière à moduler le gain dudit convertisseur de commutation (3) sur la base du retard de ladite période d'activation associée (Tk) par rapport à l'instant de départ (ZC) du semi-cycle de réseau.

5. Dispositif d'alimentation électrique selon une ou plusieurs des revendications 2 à 4, **caractérisé en ce que** chacun desdits premiers régulateurs (41k) comprend :
- des premiers moyens de régulation (411k) pour calculer une valeur d'erreur (I_{Δ}(Tk)), qui est indicative du comportement dudit courant d'entrée (I_{IN}) par rapport à une première valeur de référence (I_{REF}(Tk)) dudit courant d'entrée ;
- des seconds moyens de régulation (412k) pour calculer ladite première valeur de commande (Δf_{HC}(Tk)) en réponse à ladite valeur d'erreur (I_{Δ}(Tk)).

6. Dispositif d'alimentation électrique selon une ou plusieurs des revendications précédentes, **caractérisé en ce que** lesdits moyens de commande (4) comprennent un second régulateur (42) dudit convertisseur de commutation pour réguler la puissance d'entrée moyenne (P_{IN}(nT1)) reçue du réseau (10), ledit second régulateur calculant une seconde valeur de commande (f_{POW}(nT1)), qui est en rapport avec ladite quantité de commande (f_{S}).

7. Dispositif d'alimentation électrique selon les revendications 2 et 6, **caractérisé en ce que** lesdits moyens de commande (4) comprennent des premiers moyens de calcul (43) pour calculer ladite quantité de commande (f_{S}(nT1+Tk)) sur la base de ladite première valeur de commande (Δf_{HC}(nT1)), calculée par chacun desdits premiers régulateurs (41k) à la période d'activation associée (Tk) et sur la base de ladite seconde valeur de commande (f_{POW}(nT1)).

8. Dispositif d'alimentation électrique selon une ou plusieurs des revendications précédentes, **caractérisé en ce que** lesdits moyens de commande (4) sont mis en oeuvre numériquement par un microprocesseur.

9. Four à micro-ondes, **caractérisé en ce qu'**il comprend un dispositif d'alimentation électrique selon une ou plusieurs des revendications précédentes.

10. Procédé de fonctionnement d'un dispositif d'alimentation électrique (1) pour fournir de l'énergie à un four à micro-ondes, ledit dispositif d'alimentation électrique recevant du réseau une tension d'entrée (V_{IN}) et un courant d'entrée (I_{IN})ayant des semi-cycles de réseau d'une durée prédéfinie (T1), ledit dispositif d'alimentation électrique comprenant un convertisseur de commutation (3) pour fournir de l'énergie électrique à un dispositif magnétron (5) dudit four à micro-ondes, **caractérisé en ce qu'**il comprend les étapes consistant à :
- déterminer une pluralité de périodes d'activation (Tk, T(k-1)) comprises dans un semi-cycle de réseau ;
- fournir une pluralité de premiers régulateurs (41k) dudit convertisseur de commutation (3) pour réguler ledit courant d'entrée (I_{IN}) ;
- activer chacun desdits premiers régulateurs (41k) à une période d'activation associée (Tk) appartenant à ladite pluralité de périodes d'activation (Tk, T(k-1)).

11. Procédé selon la revendication 10, **caractérisé en ce que** chacun desdits premiers régulateurs (41k) calcule une première valeur de commande (Δf_{HC}(Tk)), qui est en rapport avec une quantité de commande (f_{S}) pour commander ledit convertisseur de commutation (3).

12. Procédé selon la revendication 11, **caractérisé en ce que** ladite première valeur de commande (Δf_{HC}(Tk)) est maintenue fixe pendant une période égale à la durée de l'une desdites périodes d'activation (Tk, T(k-1)), lorsque ladite première valeur de commande est employée pour commander ledit convertisseur de commutation (3).

13. Procédé selon une ou plusieurs des revendications 11 à 12, **caractérisé en ce que** chacun desdits premiers régulateurs (41k) calcule ladite première valeur de commande (Δf_{HC}(Tk)) de manière à moduler le gain dudit convertisseur de commutation (3) sur la base du retard de ladite période d'activation associée (Tk) par rapport à l'instant de départ (ZC) du semi-cycle de réseau.

14. Procédé selon une ou plusieurs des revendications 11 à 13, **caractérisé en ce que** chacun desdits premiers régulateurs (41k) :
- calcule une valeur d'erreur (I_{Δ}(Tk)) qui est indicative du comportement dudit courant d'entrée (I_{IN}) par rapport à une première valeur de référence (I_{REF}(Tk)) dudit courant d'entrée ;
- calcule ladite première valeur de commande (Δf_{HC}(Tk)) en réponse à ladite valeur d'erreur (I_{Δ}(Tk)).

15. Procédé selon une ou plusieurs des revendications 10 à 14, **caractérisé en ce qu'**il comprend l'étape consistant à :
- fournir un second régulateur (42) dudit convertisseur de commutation (3) pour réguler la puissance d'entrée moyenne (P_{IN}) reçue du réseau (10), ledit second régulateur calculant une seconde valeur de commande (f_{POW}(nT1)) qui est en rapport avec ladite quantité de commande (f_{S}).

16. Procédé selon les revendications 11 et 15, **caractérisé en ce qu'**il comprend l'étape consistant à :
- fournir des premiers moyens de calcul (43) pour calculer ladite quantité de commande (f_{S}(nT1+Tk)) sur la base de ladite première valeur de commande (Δf_{HC}(Tk)) calculée par chacun desdits premiers régulateurs (41k) à la période d'activation associée (Tk) et sur la base de ladite seconde valeur de commande (f_{POW}(nT1)).
